(19) Europäisches Patentamt
European Patent Office
Office européen des brevets

(11) **EP 0 986 261 A2**

(12) **EUROPÄISCHE PATENTANMELDUNG**

(43) Veröffentlichungstag:
**15.03.2000 Patentblatt 2000/11**

(51) Int. Cl.[7]: **H04N 7/36**

(21) Anmeldenummer: **99116099.5**

(22) Anmeldetag: **17.08.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **07.09.1998 DE 19840735**

(71) Anmelder: **ROBERT BOSCH GMBH**
**70442 Stuttgart (DE)**

(72) Erfinder: **Bruenig, Michael**
**52064 Aachen (DE)**

(54) **Blockbasierte Bewegungsschätzung bei der Bewegtbildkodierung**

(57)   Bei einem Verfahren zur Bewegungsschätzung bei der Bewegtbildcodierung unter Verwendung eines Fehlermaßes FM, wobei ein Bild $I_1$ in L gleich große Regionen $\Gamma i$ aufgeteilt wird, die Grauwerte jeder Region $\Gamma i$ in einen Spaltenvektor $\mathbf{g}^i_1$ der Länge M = Nh * Nv/L zusammengefaßt werden, zu jedem Spaltenvektor $\mathbf{g}^i_1$ in $I_1$ ein Satz von K Grauwertvektoren $g^i_{0,k}$ in einem vorangegangenen Bild $I_0$ entspricht, wobei K die Anzahl der Suchpositionen bezeichnet, und sich der gesuchte Bewegungsvektor $\hat{d}_i$ aus dem verwendeten Fehlermaß ergibt, wird die Region $\Gamma i$ zur schnelleren Berechnung der Bewegungsschätzung in P Unterbereiche unterteilt wird.

Ferner wird bei einem Verfahren zum Nachweis einer schnellen blockbasierten Bewegungsschätzung unter Verwendung von Unterblöcken die Codierzeit eines zu untersuchenden Coders mit derjenigen eines Referenzcoders verglichen, wobei der Referenzcoder mit Unterblöcken arbeitet.

Fig. 3 a-c

EP 0 986 261 A2

**Beschreibung**

Die Erfindung betrifft eine schnelle blockbasierte Bewegungsschätzung zur anschließenden Bewegungskompensation bei der Bewegtbildkodierung.

Die Bewegungsschätzung und anschließende Bewegungskompensation spielt eine Schlüsselrolle bei den heutigen Verfahren der Bewegtbildcodierung. Block-Matching ist eine häufig angewendete Methode, um einen Bewegungsvektor zu ermitteln. Dabei wird in einem definierten Suchbereich jede mögliche Position eines Blockes bezüglich eines Fehlerkriteriums oder Fehlermaßes untersucht. Als Fehlermaße werden hier häufig das SAD (sum of absolute differences) und das MSE (mean square error) verwendet. Die Anzahl notwendiger Operationen für diese volle Suche ist sehr groß und beeinflußt die Ausführungsgeschwindigkeit eines Bewegtbildcoders maßgeblich. Daher sind für Echtzeitanwendungen schnelle Verfahren zur Bewegungsschätzung von großer Bedeutung.

W. Li und E. Salari, "Successive elimination algorithm for motion estimation", IEEE Trans. Image Processing, 4(1): 105-107, Jan. 1995, beschreiben ein schnelles Verfahren zur Bewegungsschätzung unter dem Namen "Successive Elimination Algorithm", der abgekürzt als SEA bezeichnet wird. Hierbei kann durch eine Abschätzung eine große Zahl von Suchpositionen von vornherein ausgelassen und trotzdem der optimale Bewegungsvektor ermittelt werden. Als Fehlerkriterium wird hierbei das SAD verwendet. Die Schärfe der Abschätzung ist entscheidend für die Anzahl der Suchpositionen, die dadurch ausgelassen werden können, und somit für die Ausführungsgeschwindigkeit des Coders.

Für die restlichen Suchpositionen muß das Fehlerkriterium bestimmt werden. Dabei kann die Berechnung abgebrochen werden, sobald ein vorher gefundenes Minimum überschritten wurde. Die Anzahl dieser Berechnungen beeinflußt die Ausführungsgeschwindigkeit des Coders ebenfalls maßgeblich.

Nachteilig bei dem bekannten Verfahren ist dennoch seine große Anzahl von Suchpositionen und daraus resultierende unzureichende Ausführungsgeschwindigkeit des Coders, insbesondere bei Echtzeitanwendungen.

Der Erfindung liegt daher die Aufgabe zugrunde, ein schnelleres Verfahren zur Bewegungsschätzung zu entwickeln.

Die Aufgabe wird durch die Merkmale des Anspruchs 1 gelöst. Bevorzugte Ausgestaltungen der Erfindung sind Gegenstand der Unteransprüche.

Bei dem erfindungsgemäßen Verfahren zur Bewegungsschätzung bei der Bewegtbildcodierung unter Verwendung eines Fehlermaßes FM, wobei ein Bild $I_1$ in L gleich große Regionen $\Gamma i$ aufgeteilt wird, die Grauwerte jeder Region $\Gamma i$ in einen Spaltenvektor $\mathbf{g}^i_1$ der Länge $M = N_h * N_v/L$ zusammengefaßt werden, zu jedem Spaltenvektor $\mathbf{g}^i_1$ in $I_1$ ein Satz von K Grauwertvektoren $\mathbf{g}^i_{0,k}$ in einem vorangegangenen Bild $I_0$ entspricht, wobei K die Anzahl der Suchpositionen bezeichnet, und sich der gesuchte Bewegungsvektor $\hat{d}_i$ aus dem verwendeten Fehlermaß ergibt, wird die Region $\Gamma i$ zur schnelleren Bewegungsschätzung in P Unterbereiche unterteilt.

Vorzugsweise weist das erfindungsgemäße die folgenden Schritte auf:

a) Bestimmen eines ersten Fehlermaßes $FM^i$ des i-ten Blocks $\mathbf{g}^i_1$ des Bilds $I_1$ und einem ersten Block des i-ten Grauwertvektor $\mathbf{g}^i_{0,1}$ des vorangegangenen Bildes $I_0$,
b) Bestimmen der Summen der Grauwerte der Unterbereiche eines weiteren Blocks $\mathbf{g}^i_{0,k}$ und des Blocks $\mathbf{g}^i_1$,
c) Berechnen eines neuen Fehlermaßes $FM^i_n$ für die Blöcke des Schritts b), falls die Summe der absoluten Differenzen der Grauwertsummen der Unterbereiche im Schritt b) kleiner ist als $FM^i$, und Zuweisen von $FM^i_n \rightarrow FM^i$ falls das neue Fehlermaß kleiner als das vorangegangene Fehlermaß ist, und
d) Fortsetzen des Verfahrens mit Schritt b) solange $k \leq K$

Ferner wird für die Grauwertblöcke des vorangegangenen Bildes, für die die Bedingung des Schritts c) zutrifft, das Fehlermaß über die Unterbereiche berechnet.

Als Fehlermaß FM kann ein geeignetes Maß, wie beispielsweise SAD oder MSE verwendet werden.

Wird das SAD verwendet, so ergeben die Bewegungsvektoren $\hat{d}_i$ zu

$$\arg \min_k \text{SAD}^i_k \text{ mit } \text{SAD}^i_k := \sum_{j=1}^{M} |g^i_1(j) - g^i_{0,k}(j)|.$$

Ferner lautet die Abschätzung für das SAD für das Beispiel P = 2 Unterblöcke:

$$\left| \sum_{j=1}^{N} |g^i_1(j)| - \sum_{j=1}^{N} |g^i_{0,k}(j)| \right| + \left| \sum_{j=N+1}^{M} |g^i_1(j)| - \sum_{j=N+1}^{M} |g^i_{0,k}(j)| \right| \leq \text{SAD}^i_k$$

Ferner erfolgt die Berechnung des Fehlermaßes für K ≤ N < M für P = 2 Unterblöcke nach:

$$Q_i' = \sum_{j=1}^{K} |g^i{}_1(j) - g^i{}_{0,k}(j)| + |\sum_{j=N+1}^{M} |g^i{}_1(j)| - \sum_{j=N+1}^{M} |g^i{}_{0,k}(j)||.$$

Wird das MSE verwendet, so ergeben sich die Bewegungsvektoren $\hat{d}_i$ zu arg

$$\min_{k} MMSE^i{}_k$$

mit

$$MMSE^i{}_k = \sum_{j=1}^{M} (g^i{}_1(j) - g^i{}_{0,k}(j))^2$$

Ferner lautet die Abschätzung für das MSE für das Beispiel P = 2 Unterblöcke:

$$\frac{1}{N}(\sum_{j=1}^{N} |g^i{}_1(j)| - \sum_{j=1}^{N} |g^i{}_{0,k}(j)|)^2 +$$

$$\frac{1}{M-N}(\sum_{j=N+1}^{M} |g^i{}_1(j)| - \sum_{j=N+1}^{M} |g^i{}_{0,k}(j)|)^2 \leq MMSE^i{}_k$$

Ferner erfolgt die Berechnung des Fehlermaßes für K ≤ N < M für P = 2 Unterblöcke nach:

$$Q'_i = \sum_{j=1}^{K} (g^i{}_1(j) - g^i{}_{0,k}(j))^2 + \frac{1}{M-N}(\sum_{j=N+1}^{M} |g^i{}_1(j)| - \sum_{j=N+1}^{M} |g^i{}_{0,k}(j)|)^2.$$

Bei dem erfindungsgemäßen Verfahren zum Nachweis der schnellen Bewegungsschätzung unter Verwendung von Unterblöcken wird die Codierzeit eines zu untersuchenden Coders mit der Codierzeit eines Referenzcoders verglichen, wobei der Referenzcoder Unterblöcke verwendet.

Ferner wird der Vergleich mit Testsequenzen durchgeführt, wobei vorzugsweise die Testsequenzen aus jeweils zwei Bildern erstellt werden, wobei das erste Bild einen konstanten Grauwert g enthält, während das zweite Bild aus Blöcken mit den Grauwerten g-1 und g+1 besteht.

Vorzugsweise sind die Testsequenzblöcke des zweiten Bildes aus horizontal wechselnden Unterblöcken, aus vertikal wechselnden Unterblöcken und aus vertikal und horizontal wechselnden Unterblöcken zusammengesetzt, wobei der Grauwert eines Unterblocks entweder g-1 oder g+1 betragen soll.

Im folgenden wird das Verfahren anhand eines SAD-Fehlermaßes für den Fall P = 2 Unterblöcke ausführlich erläutert. Die Ableitung der Bewegungsschätzung für MSE verläuft in analoger Weise, so daß für MSE nur die Ergebnisse angegeben werden. Ferner wird die Verallgemeinerung auf P > 2 Unterblöcke nicht dargestellt, da sie sich in einfachster Weise aus der Ableitung ergibt. So behandeln die Beispiele den Fall P = 4.

Es wird die folgende Notation verwendet. In einem Bild $I_1$ soll I(**x**,t) den Grauwert zur Zeit t an der Stelle

$$\mathbf{x} = (x, y)T \in \Gamma = (1, 2, \ldots, N_h) \times (1, 2, \ldots, N_v)$$

bezeichnen, wobei $I(\mathbf{x}, t) \geq 0$ für alle $\mathbf{x}$,t gelten soll. Für aufeinanderfolgende Bilder soll $I_n$ das Bild zum Zeitpunkt $t = nT$ entsprechend einer Bildwiederholrate $1/T$ bezeichnen. Die Betrachtungen zur Bewegungskompensation sollen im folgenden an dem Bilderpaar $I_0$ und $I_1$ vorgenommen werden.

Das Bild $I_1$ wird in L gleich große Regionen $\Gamma i$ aufgeteilt, die üblicherweise nicht überlappende Blöcke sind. Die Grauwerte jeder Region $\Gamma i$ werden zu einem Spaltenvektor $\mathbf{g}^i_1$ der Länge $M = N_h * N_v/L$ zusammengefaßt. Zu jedem Grauwertvektor $\mathbf{g}^i_1$ in $\Gamma i$ korrespondiert ein Satz von K Grauwertvektoren $\mathbf{g}^i_{0,k}$ in $I_0$, wobei K die Anzahl der Suchpositionen bezeichnet.

Nimmt man als Fehlermaß das SAD, so ist dies wie folgt definiert:

$$SAD^i_k := \sum_{j=1}^{M} |g^i_1(j) - g^i_{0,k}(j)|, \qquad (1)$$

wobei sich die gesuchten Bewegungsvektoren $\hat{d}_i$ ergeben zu

$$\hat{d}_i = \arg \min_k SAD^i_k . \qquad (2)$$

Für MSE lauten die Definitionen entsprechend:

$$MMSE^i_k = \sum_{j=1}^{M} (g^i_1(j) - g^i_{0,k}(j))^2 \qquad (3)$$

mit den Bewegungsvektoren:

$$\hat{d}_i = \arg \min_k MMSE^i_k \qquad (4)$$

Im oben erwähnten "Successive Elimination Algorithm" wird die Dreiecksungleichung zur Abschätzung des SAD herangezogen. Betrachtet wird die verallgemeinerte Dreiecksungleichurig:

$$|\sum_{j=1}^{M} a_j| \leq \sum_{j=1}^{M} |a_j|. \qquad (5)$$

Wählt man

$$a_j = |g^i_1(j) - g^i_{0,k}(j)| \qquad (6)$$

unter Berücksichtigung von $I(x,t) \geq 0$, so ergibt sich aus (5):

$$\left| \sum_{j=1}^{M} |g^i_1(j)| - \sum_{j=1}^{M} |g^i_{0,k}| \right| \le \sum_{j=1}^{M} |g^i_1(j) - g^i_{0,k}| \qquad (7)$$

Zusammen mit Gleichung (1) ergibt sich aus (7) eine Abschätzung für das SAD :

$$\left| \sum_{j=1}^{M} |g^i_1(j)| - \sum_{j=1}^{M} |g^i_{0,k}| \right| \le SAD^i_k \qquad (8)$$

Wenn daher für eine Region $\Gamma i$ ein SAD berechnet wurde, beispielsweise $S^i = SAD^i_1$ , kann ein kleineres $SAD^i_k$ in dieser Region nur gefunden werden, wenn die folgende Ungleichung erfüllt ist:

$$\left| \sum_{j=1}^{M} |g^i_1(j)| - \sum_{j=1}^{M} |g^i_{0,k}| \right| < S^i \qquad (9)$$

Nur in diesen Fällen wird danach ein neuer Wert für $S^i$ bestimmt durch:

$$S^i = \min( SAD^i_{k}, S^i) \qquad (10)$$

Gemäß der Erfindung läßt sich nun die Abschätzung nach (8) verbessern, indem die betrachtete Region $\Gamma i$ in kleinere Bereiche unterteilt wird, wie im folgenden gezeigt wird.

Unter Verwendung der genannten Dreiecksungleichung gelten für $1 \le N < M$ die folgenden Ungleichungen:

$$\left| \sum_{j=1}^{N} a_j \right| \le \sum_{j=1}^{N} |a_j| \text{ und } \left| \sum_{j=N+1}^{M} a_j \right| \le \sum_{j=N+1}^{M} |a_j| \qquad (11)$$

Unter Verwendung von (11) und (5) ergibt sich daher:

$$\left| \sum_{j=1}^{N} a_j + \sum_{j=N+1}^{M} a_j \right| \le \left| \sum_{j=1}^{N} a_j \right| + \left| \sum_{j=N+1}^{M} a_j \right| \le \sum_{j=1}^{N} |a_j| + \sum_{j=N+1}^{M} |a_j| \qquad (12)$$

Daraus ergibt sich durch Zusammenfassen der Summen die folgende Ungleichung:

$$\left| \sum_{j=1}^{M} a_j \right| \le \left| \sum_{j=1}^{N} a_j \right| + \left| \sum_{j=N+1}^{M} a_j \right| \le \sum_{j=1}^{M} |a_j| \qquad (13)$$

Benutzen der Definitionen (1) und (6) ergibt eine neue Abschätzung für das SAD:

$$\left| \sum_{j=1}^{N} |g^i_1(j)| - \sum_{j=1}^{N} |g^i_{0,k}(j)| \right| + \left| \sum_{j=N+1}^{M} |g^i_1(j)| - \sum_{j=N+1}^{M} |g^i_{0,k}(j)| \right| \le SAD^i_k \qquad (14)$$

Obwohl für die Berechnung der Abschätzung nur eine zusätzliche Betragsbildung und Subtraktion erforderlich ist, liefert sie laut (13) bereits bessere Ergebnisse als Ungleichung (8). Wenn die Region $\Gamma$i in P Bereiche unterteilt wird, sind auch P zusätzliche Betragsbildungen und Subtraktionen erforderlich. Die Abschätzung für das SAD wird aber mit größerem P immer besser. Ein Wert von P = 4 hat sich für Regionen der Größe 16 x 16 als sinnvoll erwiesen. Durch die bessere Abschätzung des SAD können im Vergleich zur bekannten Abschätzung (8) sehr viel mehr Blöcke von der weiteren Untersuchung ausgeschlossen werden.

Trotz der verbesserten Abschätzung muß für einige Blöcke noch das Fehlerkriterium berechnet werden. Die Summation

$$Qi = \sum_{j=1}^{K} |g^i{}_1(j) - g^i{}_{0,k}(j)|; \text{ für } K \leq M \tag{15}$$

kann abgebrochen werden, sobald $Q_i \geq S_i$ erfüllt ist Wenn die Summation bis K = M durchgeführt wurde und $Q_i < S_i$ ist, wurde ein neues $S_i = Q_i = SAD^i{}_k$ gefunden, weil das SAD dieses Blockes kleiner ist als das bisherige Minimum. Je früher die Berechnung abgebrochen werden kann, desto weniger Rechenoperationen sind erforderlich. Durch die weitere Unterteilung der Region $\Gamma$i in kleinere Bereiche ist eine Abschätzung für das Fehlermaß in den Unterregionen über (14) bereits berechnet worden und kann daher hier weiter verwendet werden. Damit ergibt sich für K ≤ N < M der folgende Wert:

$$Q_i' = \sum_{j=1}^{K} |g^i{}_1(j)-g^i{}_{0,k}(j)|+|\sum_{j=N+1}^{M} |g^i{}_1(j)|-\sum_{j=N+1}^{M} |g^i{}_{0,k}(j)||, \tag{15}$$

für den $Q_i' \geq Q_i$ gilt. Dadurch wird die Abbruchbedingung Qi' ≥ Si sehr viel schneller erfüllt und es können weitere Berechnungen eingespart werden. Falls K > N erreicht wird, wird im weiteren die einfache Summation nach (15) für den verbleibenden Anteil von $\Gamma$i verwendet

Analog ergibt sich für MSE im Fall von P = 2 Unterblöcken:

$$\frac{1}{N}(\sum_{j=1}^{N} |g^i{}_1(j)|-\sum_{j=1}^{N} |g^i{}_{0,k}(j)|)^2+\frac{1}{M-N}(\sum_{j=N+1}^{M} |g^i{}_1(j)|-$$

$$\sum_{j=N+1}^{M} |g^i{}_{0,k}(j)|)^2 \leq \text{MMSE}^i{}_k. \tag{16}$$

und die Berechnung des Fehlermaßes für K ≤ N < M für P = 2 Unterblöcke erfolgt nach:

$$Q'_i = \sum_{j=1}^{K} (g^i{}_1(j)-g^i{}_{0,k}(j))^2 + \frac{1}{M-N}(\sum_{j=N+1}^{M} |g^i{}_1(j)|-\sum_{j=N+1}^{M} |g^i{}_{0,k}(j)|)^2. \tag{17}$$

Die Erfindung wird nachfolgend anhand zweier Beispiele näher erläutert.

Beispiel 1 zeigt die Abschätzung des Fehlermaßes für einige beispielhafte Blöcke, wobei verglichen wird zwischen einer Codierung mit und ohne Unterblockbildung, und

Beispiel 2 zeigt den Einfluß der Blockunterteilung auf die Berechnung des Fehlerkriteriums.

Ferner wird ein Verfahren zum Nachweis der erfindungsgemäßen blockbasierten Bewegungsschätzung unter Verwendung der Blockunterteilung anhand der Zeichnungen beschrieben.

Fig. 1 zeigt den zeitlichen Codierverlauf eines schnellen Codierers ohne Blockunterteilung,

Fig. 2 zeigt den zeitlichen Codierverlauf eines schnellen Codierers mit Blockunterteilung, und

Fig. 3 zeigt Unterblockmuster für drei Testsequenzen.

Beispiel 1:

Es sei der folgende Block $g_1$ aus $I_1$ gegeben. Die im folgenden angeführten Blöcke sind alle in vier Unterblöcke aufgeteilt, wie es durch die Strichdicke dargestellt ist.

| 6 | 2 | 6 | 3 |
|---|---|---|---|
| 5 | 6 | 4 | 1 |
| 7 | 9 | 1 | 5 |
| 4 | 7 | 6 | 7 |

Ferner sei ein Block $g_{0,1}$ aus $I_0$ gegeben:

| 7 | 3 | 6 | 2 |
|---|---|---|---|
| 5 | 6 | 4 | 1 |
| 7 | 8 | 5 | 4 |
| 5 | 6 | 6 | 8 |

Zuerst muß ein $S = SAD_1$ mit (1) bestimmt werden:

$$S = \sum_{j=1}^{16} |g_1(j) - g_{0,1}(j)| = 12.$$

Die Summation über $g_1$ ergibt :

$$\sum_{j=1}^{16} g_1(j) = 19+14+27+19 = 79,$$

wobei die Untersummen für die vier Unterblöcke gebildet wurden.
Im folgenden kann für weitere Blöcke überprüft werden, ob eine Berechnung des SAD (oder eines anderen Fehlerkriteriums) erforderlich ist.
Es sei ein weiterer Block $g_{0,2}$ aus $I_0$ gegeben:

| 7 | 5 | 7 | 5 |
|---|---|---|---|
| 1 | 2 | 4 | 3 |
| 9 | 8 | 9 | 8 |

(fortgesetzt)

| 8 | 5 | 1 | 3 |

Ohne Blockunterteilung ergibt sich folgendes Bild:

$$\sum_{j=1}^{16} g_{0,2}(j) = 85 \text{ und } |85-79| = 6 < S$$

Es muß daher für den Block $g_{0,2}(j)$ das SAD nach Formel (13) berechnet werden.

Mit der eingezeichneten Blockunterteilung für $g_{0,2}(j)$ ergeben sich für die vier Unterblöcke die Untersummen:

$$\sum_{j=1}^{16} g_{0,2}(j) = 15 + 19 + 30 + 21,$$

so daß sich mit einer entsprechenden Anwendung von (12) ergibt: |15-19|+|19-14|+|30-27|+|21-19| = 14 > S

Es stellt sich also heraus, daß im Gegensatz zu dem bekannten Verfahren ohne Blockunterteilung für den Block $g_{0,2}$ kein SAD berechnet werden muß. Dieser Block kann daher für die Bewegungsschätzung ausgelassen werden.

Es sei ein weiterer Block $g_{0,3}$ aus $I_0$ gegeben:

| 5 | 4 | 3 | 7 |
| 1 | 4 | 4 | 9 |
| 1 | 8 | 5 | 5 |
| 2 | 5 | 1 | 0 |

Ohne Blockunterteilung ergibt die Summation:

$$\sum_{j=1}^{16} g_{0,3}(j) = 64$$

und |64-79| = 15 > S, so daß der Block $g_{0,3}$ auch beim bekannten Verfahren ausgelassen werden kann.

Mit der zusätzlichen Blockunterteilung ergeben sich die folgenden Untersummen:

$$\sum_{j=1}^{16} g_{0,3}(j) = 14 + 23 + 16 + 11,$$

sowie die Abschätzung:

$$|14-19|+|23-14|+|16-27|+|11-19| = 33 > S.$$

Folglich ergibt auch das erfindungsgemäße Verfahren, daß der Block $g_{0,3}$ ausgelassen werden kann.

Schließlich sei ein weiterer Block $g_{0,4}$ aus $I_0$ gegeben:

| 8 | 3 | 6 | 7 |
|---|---|---|---|
| 4 | 5 | 4 | 3 |
| 7 | 9 | 0 | 5 |
| 4 | 7 | 5 | 6 |

Ohne Blockunterteilung erhält man:

$$\sum_{j=1}^{16} g_{0,4}(j) = 83, \text{ sowie } |83-79| = 4 < S$$

Für den Block $g_{0,4}$ muß daher das SAD berechnet werden.

Mit der zusätzlichen Blockunterteilung ergeben sich folgende Untersummen:

$$\sum_{j=1}^{16} g_{0,4}(j) = 20 + 20 + 27 + 16.$$

Die Abschätzung ergibt:

$$|20-19|+|20-14|+|27-27|+|16-19| = 10 < S$$

Für den Block $g_{0,4}$ muß daher das SAD berechnet werden.

Beispiel 2:

Aus der Abschätzung des Beispiels 1 ergab sich, daß für den Block $g_{0,4}$ eine Berechnung des Fehlermaßes erforderlich ist. Durch die Berechnungen der Abschätzungen im Beispiel 1 sind die Summen der Unterblöcke bereits bekannt.

Es werden im Beispiel 2 die im Beispiel 1 aufgeführten Blöcke $g_1$ aus $I_1$ und $g_{0,4}$ aus $I_0$ betrachtet. Sowohl bei dem Verfahren nach dem Stand der Technik als auch nach dem erfindungsgemäßen Verfahren ergab sich, daß eine Berechnung des Fehlerkriteriums von $g_{0,4}$ notwendig ist.

Das bisher errechnete minimalste Fehlermaß S war $S = SAD_1 = 12$. Sobald bei der Berechnung des Fehlermaßes dieser Wert für einen Block überschritten ist, kann die Berechnung abgebrochen werden, da das minimalste Fehlermaß gesucht ist.

Berechnung von Q ohne Blockunterteilung:

1) |6-6| = 2
2) + |2-3| = 3
3) + |5-4| = 4
4) + |6-5| = 5
5) + |6-6| = 5
6) + |3-7| = 9
7) + |4-4| = 9
8) + |1-3| = 11
9) + |7-7| = 11
10) + |9-9| = 11

11) + |4-4| = 11

12) + |7-7| = 11

13) + |1-0| = 12 := Q

Es werden also 13 Subtraktionen, 13 Betragsbildungen und 12 Additionen benötigt, bis sich herausstellt, daß eine weitere Berechnung des Fehlermaßes im Block $g_{0,4}$ nicht weiter erforderlich ist, da dieses Fehlermaß das bereits errechnete Fehlermaß S überschreiten wird.

Berechnung von Q' mit der Blockunterteilung in Entsprechung zu (14):

1) |14-20| = 6 ; Differenz der zweiten Unterblöcke

2) + |27-27| = 6 ; Differenz der dritten Unterblöcke

3) + |19-16| = 9 ; Differenz der vierten Unterblöcke

4) + |6-8| = 11 ; Differenz der ersten Positionen

5) + |2-3| = 12 ; Differenz der zweiten Positionen

$\Rightarrow Q' \geq 12$,

also Abbruch der Berechnung eines Fehlermaßes für den Block $g_{0,4}$. Dabei wurden die ersten drei Beiträge im Beispiel 1 schon berechnet und müssen daher nur zwischengespeichert werden. Es sind daher nur zwei Subtraktionen, 2 Betragsbildungen und 4 Additionen notwendig, um zu entscheiden, ob die Berechnung abgebrochen werden kann.

Einer der großen Vorteile des Verfahrens liegt darin, daß die geschätzten Bewegungsvektoren mit dem Ergebnis einer vollen Suche übereinstimmen. Obwohl das zunächst den Nachweis der Verwendung des Verfahrens erschwert, kann trotzdem gezeigt werden, daß in einem Coder die erfindungsgernäße Bewegungsschätzung eingesetzt wird. Wenn die Bewegungsschätzung mit der vollen Suche übereinstimmt, ist die Codiergeschwindigkeit des zu untersuchenden Coders ein deutliches Merkmal, weil die Bewegungsschätzung die Ausführungszeit von Bewegtbildcodern dominiert.

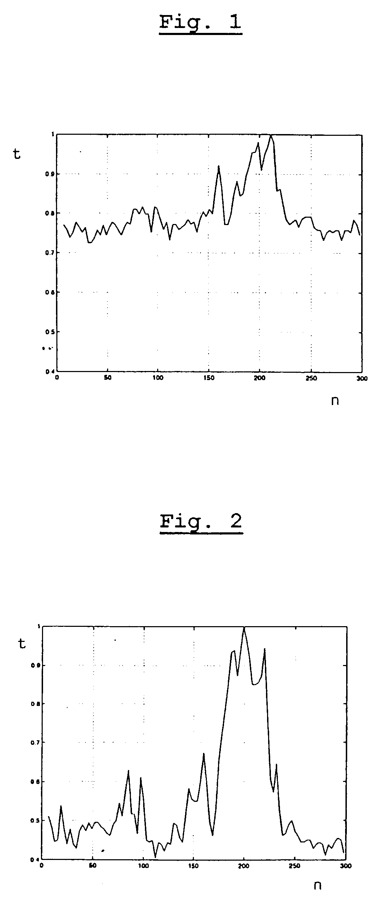

Wurde bei einem (schnellen) Coder festgestellt, daß die Bewegungsschätzung der vollen Suche entspricht, liefert ein Zeitdiagramm erste Aufschlüsse darüber, ob das Verfahren mit Unterblöcken eingesetzt wurde. Hierbei wird für eine Testsequenz die Codiergeschwindigkeit für die einzelnen Bilder über die Bildnummer aufgetragen. Es ergibt sich eine für das verwendete Verfahren typische Kurve. Fig. 1 zeigt die Codierzeit eines Coders mit einem schnellen Verfahren für die MPEG 4 Testsequenz "Foreman". In Fig. 2 ist die Codierzeit des Referenzcoders mit der Bewegungsschätzung unter Verwendung von Unterblöcken für die gleiche Sequenz dargestellt. In beiden Darstellungen wurde die maximale Codierzeit auf eins normiert.

Man erkennt, daß schon das Verhältnis zwischen maximaler und minimaler Codierzeit beim Referenzcoder mit einem Faktor 2.5 deutlich größer ist, als bei dem zu untersuchenden Coder, der einen Faktor von 1.38 aufweist. Hieraus kann geschlossen werden, daß das Verfahren der Blockunterteilung bei dem untersuchten Coder nicht zum Einsatz kam.

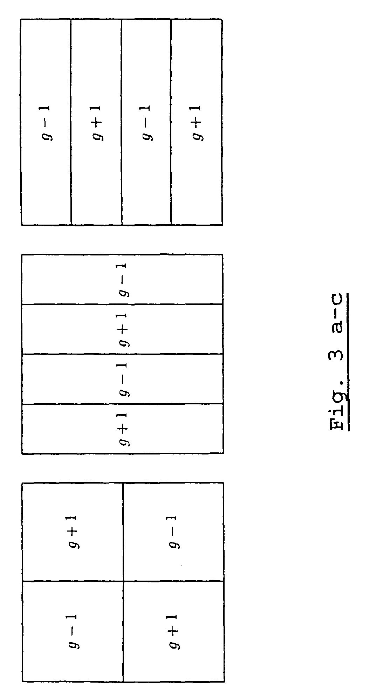

Wenn sich die Zeitdiagramme auch für verschiedene Testsequenzen stark ähneln, kann eine weitere Untersuchungsmethode angewendet werden. Dafür werden zunächst drei Testsequenzen aus jeweils zwei Bildern erstellt. Das erste Bild enthält einen konstanten Grauwert g. Das zweite Bild besteht aus Blöcken die gemäß Fig. 3a-c mit den Grauwerten g-1 und g+1 gefüllt sind. Für jede der drei Testsequenzen wird ein Füllmuster ausgewählt. Für Coder nach den Codierstandards H.26x oder MPEG müssen die ungeteilten Blöcke eine Größe von 16 x 16 Pixel haben. Die drei Füllmuster entsprechen den sinnvollen Unterteilungsmöglichkeiten eines Blockes in Unterblöcke. Kompliziertere Unterteilungen würden deutlich zu Lasten der Ausführungsgeschwindigkeit eines Coders gehen und müssen daher nicht betrachtet werden.

Im folgenden wird mit dem zu untersuchenden Coder jede der drei kurzen Testsequenzen codiert und dabei die Ausführungszeit gemessen. Ist die Ausführungszeit bei genau einer der Testsequenzen deutlich geringer als bei den anderen beiden Testsequenzen (weniger als 50%), verwendet der untersuchte Coder mit hoher Wahrscheinlichkeit eine Bewegungsschätzung mit Unterblöcken. Der Grund dieses Verhaltens liegt in der Verwendung der Abschätzung für das Fehlermaß nach der Ungleichung (12). Wenn das Unterblockmuster mit dem des Coders übereinstimmt, kann jeder Block im Suchbereich bis auf den ersten Block (Nullvektor) von der Berechnung des Fehlermaßes ausgeschlossen werden. Für die jeweils anderen beiden Muster versagt die Abschätzung und das Fehlermaß muß für jede Suchposition berechnet werden. Dadurch ergibt sich die große Differenz in der Ausführungsgeschwindigkeit.

Ein Coder kann daher auf die Verwendung von Unterblöcken bei der Bewegungsschätzung untersucht werden. Dazu gibt es verschiedene Merkmale:

Die Bewegungsschätzung unterscheidet sich qualitativ nicht von der vollen Suche.

Die Codierzeit über die Bildnummer aufgetragen ergibt eine charakteristische Kurve.

Mit Hilfe bestimmter Testsequenzen, die für das Verfahren optimiert sind, ergibt sich eine sehr deutliche Reduktion der Codierzeit im Vergleich zu nicht optimierten Sequenzen.

Deuten alle drei Merkmale auf die Verwendung von Unterblöcken hin, kann davon ausgegangen werden, daß in dem untersuchten Coder die Bewegungsschätzung mit Unterblöcken zum Einsatz kommt.

**Patentansprüche**

1. Verfahren zur Bewegungsschätzung bei der Bewegtbildcodierung unter Verwendung eines Fehlermaßes (FM), wobei ein Bild $I_1$ in L gleich große Regionen $\Gamma i$ aufgeteilt wird, die Grauwerte jeder Region $\Gamma i$ in einen Spaltenvektor $\mathbf{g}^i_1$ der Länge M = Nh * Nv/L zusammengefaßt werden, zu jedem Spaltenvektor $\mathbf{g}^i_1$ in $I_1$ ein Satz von K Grauwertvektoren $\mathbf{g}^i_{0,k}$ in einem vorangegangenen Bild $I_0$ entspricht, wobei K die Anzahl der Suchpositionen bezeichnet, und sich der gesuchte Bewegungsvektor $\hat{d}_i$ aus dem verwendeten Fehlermaß ergibt,
    **dadurch gekennzeichnet**, daß
die Region $\Gamma i$ in P Unterbereiche unterteilt wird.

2. Verfahren nach Anspruch 1, **dadurch gekennzeichnet**, daß es die folgenden Schritte aufweist:

    a) Bestimmen eines ersten Fehlermaßes $FM^i$ des i-ten Blocks $\mathbf{g}^i_1$ des Bilds $I_1$ und einem ersten Block des i-ten Grauwertvektor $\mathbf{g}^i_{0,1}$ des vorangegangenen Bildes $I_0$,
    b) Bestimmen der Summen der Grauwerte der Unterbereiche eines weiteren Blocks $\mathbf{g}^i_{0,k}$ und des Blocks $\mathbf{g}^i_1$,
    c) Berechnen eines neuen Fehlermaßes $FM^i_n$ für die Blöcke des Schritts b), falls die Summe der absoluten Differenzen der Grauwertsummen der Unterbereiche im Schritt b) kleiner ist als $FM^i$, und Zuweisen von $FM^i_n \rightarrow FM^i$ falls das neue Fehlermaß kleiner als das vorangegangene Fehlermaß ist, und
    d) Fortsetzen des Verfahrens mit Schritt b) solange k ≤ K

3. Verfahren nach Anspruch 2, **dadurch gekennzeichnet**, daß für die Grauwertblöcke des vorangegangenen Bildes, für die die Bedingung des Schritts c) zutrifft, das Fehlermaß über die Unterbereiche berechnet wird.

4. Verfahren nach einem der vorangegangenen Ansprüche, **dadurch gekennzeichnet**, daß SAD oder MSE als Fehlermaß verwendet wird.

5. Verfahren nach Anspruch 4, **dadurch gekennzeichnet**, daß bei SAD sich die Bewegungsvektoren $\hat{d}_i$ ergeben zu arg

$$\min_{k} SAD^i_k$$

mit

$$SAD^i_k := \sum_{j=1}^{M} |g^i_1(j) - g^i_{0,k}(j)|.$$

6. Verfahren nach Anspruch 5, **dadurch gekennzeichnet**, daß die Abschätzung für SAD bei P=2 Unterblöcken lautet:

$$|\sum_{j=1}^{N} |g^i_1|(j)| - \sum_{j=1}^{N} |g^i_{0,k}(j)|| + |\sum_{j=N+1}^{M} |g^i_1|(j)| - \sum_{j=N+1}^{M} |g^i_{0,k}(j)|| \leq SAD^i_k$$

7. Verfahren nach Anspruch 6, dadurch gekennzeichnet, daß bei der Berechnung des Fehlermaßes für K ≤ N < M am Beispiel P=2 erfolgt nach

$$Q_i' = \sum_{j=1}^{K} |g^i{}_1(j) - g^i{}_{0,k}(j)| + | \sum_{j=N+1}^{M} |g^i{}_1(j)| - \sum_{j=N+1}^{M} |g^i{}_{0,k}(j)||.$$

**8.** Verfahren nach Anspruch 4, **dadurch gekennzeichnet**, daß bei MSE sich die Bewegungsvektoren $\hat{d}_i$ ergeben zu arg

$$\min_{k} \mathrm{MMSE}^i{}_k$$

mit

$$\mathrm{MMSE}^i{}_k = \sum_{j=1}^{M} (g^i{}_1(j) - g^i{}_{0,k}(j))^2$$

**9.** Verfahren nach Anspruch 8, **dadurch gekennzeichnet**, daß die Abschätzung für das MSE für das Beispiel P = 2 Unterblöcke lautet:

$$\frac{1}{N} (\sum_{j=1}^{N} |g^i{}_1(j)| - \sum_{j=1}^{N} |g^i{}_{0,k}(j)|)^2 + \frac{1}{M-N} (\sum_{j=N+1}^{M} |g^i{}_1(j)| -$$

$$\sum_{j=N+1}^{M} |g^i{}_{0,k}(j)|)^2 \leq \mathrm{MMSE}^i{}_k.$$

**10.** Verfahren nach Anspruch 9, **dadurch gekennzeichnet**, daß bei der Berechnung des Fehlermaßes für K ≤ N < M für P = 2 Unterblöcke erfolgt nach:

$$Q'_i = \sum_{j=1}^{K} (g^i{}_1(j) - g^i{}_{0,k}(j))^2 + \frac{1}{M-N} (\sum_{j=N+1}^{M} |g^i{}_1(j)| - \sum_{j=N+1}^{M} |g^i{}_{0,k}(j)|)^2.$$

**11.** Verfahren zum Nachweis der schnellen Bewegungsschätzung unter Verwendung von Unterblöcken nach einem der vorangegangenen Ansprüche, **dadurch gekennzeichnet**, daß die Codierzeit eine zu untersuchenden Coders mit der Codierzeit eines Referenzcoders verglichen wird, wobei der Referenzcoder Unterblöcke verwendet.

**12.** Verfahren nach Anspruch 11, **dadurch gekennzeichnet**, daß der Vergleich mit Testsequenzen durchgeführt wird.

**13.** Verfahren nach Anspruch 12, **dadurch gekennzeichnet**, daß die Testsequenzen aus jeweils zwei Bildern erstellt werden, wobei das erste Bild einen konstanten Grauwert g enthält, während das zweite Bild aus Blöcken mit den Grauwerten g-1 und g+1 besteht.

**14.** Verfahren nach Anspruch 13, **dadurch gekennzeichnet**, daß die Testsequenzblöcke des zweiten Bildes aus horizontal wechselnden Unterblöcken, aus vertikal wechselnden Unterblöcken und aus vertikal und horizontal wechselnden Unterblöcken zusammengesetzt ist, wobei der Grauwert eines Unterblocks entweder g-1 oder g+1 beträgt.

# Fig. 1

# Fig. 2

EP 0 986 261 A2

Fig. 3 a-c